(19) Europäisches Patentamt
European Patent Office
Office européen des brevets

(11) **EP 2 332 017 B1**

(12) **EUROPEAN PATENT SPECIFICATION**

(45) Date of publication and mention
of the grant of the patent:
**30.03.2016 Bulletin 2016/13**

(51) Int Cl.:
*G01S 7/00* *(2006.01)*  *G01S 13/72* *(2006.01)*
*G01S 13/86* *(2006.01)*

(21) Application number: **09785562.1**

(22) Date of filing: **02.09.2009**

(86) International application number:
**PCT/GB2009/051103**

(87) International publication number:
**WO 2010/026417 (11.03.2010 Gazette 2010/10)**

(54) **ESTIMATING A STATE OF AT LEAST ONE TARGET**

SCHÄTZUNG DES ZUSTANDS VON MINDESTENS EINEM ZIEL

ESTIMATION DE L'ÉTAT D'AU MOINS UNE CIBLE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **03.09.2008 GB 0816040**
**03.09.2008 EP 08275048**

(43) Date of publication of application:
**15.06.2011 Bulletin 2011/24**

(73) Proprietor: **BAE Systems PLC**
**London SW1Y 5AD (GB)**

(72) Inventors:
• **NICHOLSON, David**
**Bristol BS34 7QW (GB)**
• **COURONNEAU, Nicolas**
**Bristol BS34 7QW (GB)**

(74) Representative: **BAE SYSTEMS plc**
**Group IP Department**
**P.O. Box 87**
**Warwick House**
**Farnborough Aerospace Centre**
**Farnborough**
**Hampshire GU14 6YU (GB)**

(56) References cited:
**WO-A1-02/30717**    **US-A- 4 860 216**
**US-A1- 2006 222 209**

**Description**

The present invention relates to estimating a state of at least one target.

Sensors are widely used for monitoring and surveillance applications and often track moving targets for various purposes, e.g. military or safety applications. US4860216 discloses a multi-sensor system using multi-sensor data fusion for estimating target position measurements.

A known sensing technique that involves multiple sensors is a distributed sensor fusion network. The sensors in the network operate a Decentralised Data Fusion (DDF) algorithm (DDF is described in J. Manyika and H.F. Durrant-Whyte, Data Fusion and Sensor Management: A Decentralised Information-Theoretic Approach, Ellis Horwood, 1994), where data based on measurements taken by each sensor in the network are transmitted to the other sensors. Each sensor then performs a fusing operation on the data it has received from the other sensors as well as data based on its own measurements in order to predict the states (typically locations and velocities) of the targets.

A problem associated with distributed sensor fusion networks is inadequate sensor registration. In multiple sensor surveillance systems/networks each sensor makes measurements of target positions in the survey volume and the measurements are integrated over time and combined using statistical data fusion algorithms to generate target tracks (a track typically comprises a position and velocity estimate and its calculated error). Sensor measurement errors are composed of two components: a random component ("noise") and a systematic component ("bias"). Sensor measurement errors can be constant or time-varying ("drift"). When multiple sensors are fused, uncorrected biases in their measurements can cause serious degradation of track estimates, which is known as the sensor registration problem. Sensor registration can be considered to be the process of estimating and removing a sensor's systematic errors, or "registration errors".

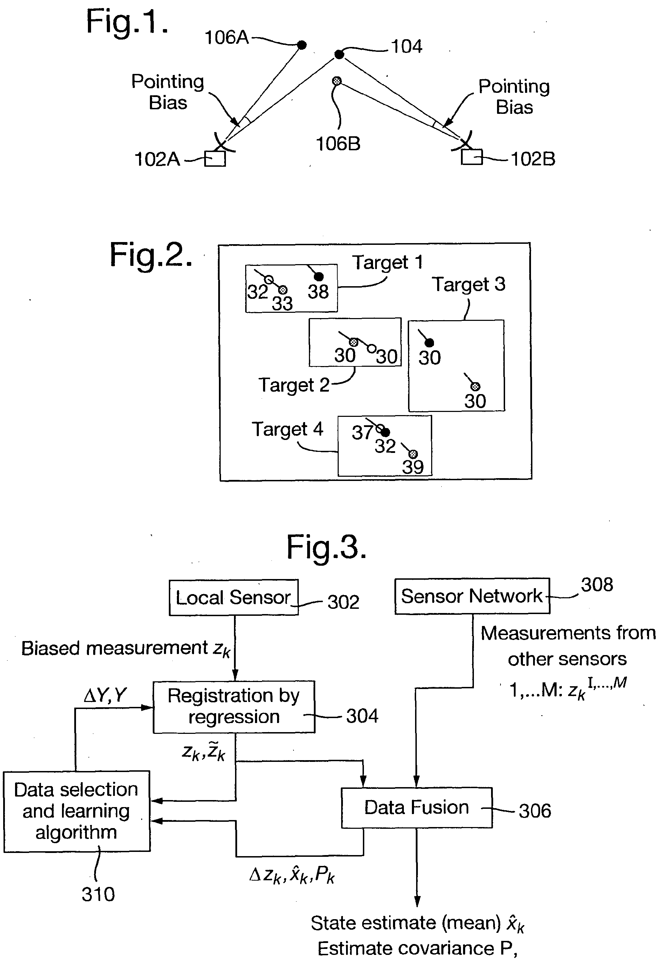

An example of registration errors resulting from sensor pointing biases is illustrated in Figure 1. Two sensors 102A, 102B each track a target 104. Due to the pointing biases (e.g. the processors of the sensors have an inaccurate record of the sensors bearing measurement origins). The first sensor 102A outputs a measurement of the target being at location 106A, whilst the second sensor 102B outputs a measurement of the target at location 106B. Other examples of registration errors include clock errors, tilt errors, and location errors (see M.P. Dana, "Registration: A pre-requisite for multiple sensor tracking". In Y. Bar-Shalom (Ed.), Multitarget-Multisensor Tracking: Advanced Applications. Artech House, 1990, Ch. 5, for example).

The effect of another example of registration errors is illustrated schematically in Figure 2, where four targets tracked from three different sensors produce a total of 10 different tracks. This proliferation of sensor tracks is a consequence of uncorrected registration errors adversely influencing the output of a multi-sensor multi-target tracking and data fusion system.

Common solutions to the sensor registration problem assume that registration errors can be described by a simple model (e.g. fixed offsets) and the parameters of that model are estimated as part of the data fusion process. In practice, registration errors exhibit spatial variations (due to environmental or other conditions) and it is unreasonable to assume all sources of registration error are known. New sources of errors may also arise as sensor technology develops. Furthermore, registration errors can change over time, due to sensor wearing, changes in environmental conditions, etc. It is usually very difficult to accurately model such errors as they are caused by natural phenomenon and can vary very slowly.

Embodiments of the present invention are intended to address at least some of the problems outlined above.

According to one aspect of the present invention there is provided a method of estimating a target measurement relating to at least one target position, the method including:

obtaining at least one target measurement from a first sensor, and applying a Gaussian Process (GP) technique to a said target measurement to obtain an estimated updated target measurement by calculating a predicted bias for the measurement from a regression model represented by the GP and using the predicted bias to produce the updated target measurement.

The first sensor may be part of a Distributed Data Fusion (DDF) network including at least one further sensor. The method may further include fusing the updated target measurement with at least one further target measurement obtained from the least one further sensor in the distributed sensor fusion network to generate a fused measurement or measurements relating to the at least one target. The step of applying the Gaussian Process technique can include performing a learning process based on the at least one target measurement and the fused measurement or measurements to generate a training set for use with the regression model. The learning process may involve calculating a covariance matrix and a Cholesky factor of the covariance matrix, where the Cholesky factor is used with the regression model for computational efficiency.

The training set may initially include a measurement value known or assumed to represent an error-free measurement taken by the first sensor. The GP regression model may be a non-linear, non-parametric regression model.

According to another aspect of the present invention there is provided a sensor configured to estimate a target measurement relating to at least one target position, the sensor including:

a device configured to obtain at least one target measurement, and

a processor configured to apply a Gaussian Process (GP) technique to a said target measurement to obtain an estimated updated measurement by calculating a predicted bias ($\Delta z_k^*$) for the measurement ($z_k$) from a regression model represented by the GP and using the predicted bias to produce the estimated updated target measurement ($\tilde{z}_k$).

The processor may be integral with the sensor, or may be remote from it. According to another aspect of the present invention there is provided a computer program product comprising computer readable medium, having thereon computer program code means, when the program code is loaded, to make the computer execute a method of estimating a target measurement relating to at least one target position including:

obtaining at least one target measurement from a first sensor, and

applying a Gaussian Process (GP) technique to a said target measurement to estimate an updated target measurement by calculating a predicted bias ($\Delta z_k^*$) for the measurement ($z_k$) from a regression model represented by the GP and using the predicted bias to produce the estimated updated target measurement ($\tilde{z}_k$).

According to a further aspect of the present invention there is provided a method of estimating a state of at least one target tracked by a plurality of sensors within a distributed sensor fusion network, wherein at least one of the sensors within the network has been registered using a technique involving a Gaussian Process.

The invention may be performed in various ways, and, by way of example only, embodiments thereof will now be described, reference being made to the accompanying drawings in which:

Figure 1 is a schematic diagram of sensors tracking a target;

Figure 2 illustrates schematically errors arising from pointing bias of sensors;

Figure 3 illustrates schematically a data flow in an embodiment of the system including a sensor;

Figure 4 illustrates schematically steps involved in a data selection and learning process relating to measurements taken by the sensor;

Figure 5 illustrates schematically steps involved in a regression process for the sensor measurements;

Figure 6A is a graphical representation of an example comparison between measured and true states of a target prior to registration of a sensor, and

Figure 6B is a graphical representation of an example comparison between measured and true states of a target following registration of the sensor.

Referring to Figure 3, a local sensor 302 obtains a measurement $z_k$, where k is an index which refers to a discrete set of measurement times. The measurement will typically represent the location and velocity of the target, but other features, e.g. bearing, could be used. The measurement is passed to a registration process 304 (described below) that produces a corrected measurement value that compensates for any bias that is calculated to be present in the sensor, i.e. the corrected measurement value ($\tilde{z}_k$) is a revised record of the position of the sensor within the sensor network. In the present example, the correction is applied "virtually" in software, but it is also possible to apply the correction in hardware, i.e. physically reconfigure the sensor. It will be understood that the registration process may be executed by a processor integral with the sensor 302, or by a remote processor that receives data relating to the measurement taken by the sensor.

In the present embodiment the sensor is part of a DDF network of sensors and the updated measurement, which is intended to correct the bias in the original measurement taken by the sensor, is used in a fusion process along with measurements taken from the other sensors (all or some of which may also be executing a registration process 304), although it will be understood that calculating the updated/improved measurement can be of value for improving the accuracy of a measurement taken from a single sensor.

The original measurement $z_k$ and the corrected measurement $\tilde{z}_k$ are passed to a data fusion process 306. The process 306 may comprise a conventional data fusion algorithm such as the Kalman filter or extended Kalman filter. At least one further measurement ($z_k^n$ in the example) from at least one other sensor n in the network 308 is also passed to the data fusion process 306. The process 306 produces a state estimate of mean $\hat{x}_k$ and error covariance $P_k$ that will normally have improved accuracy because errors resulting from incorrect sensor registration have been eliminated or mitigated. The $\Delta z_k$ value (that represents a calculated bias for the measurement $z_k$ taken by the sensor) resulting from the data fusion process 306 is passed to a training data selection and learning process 310.

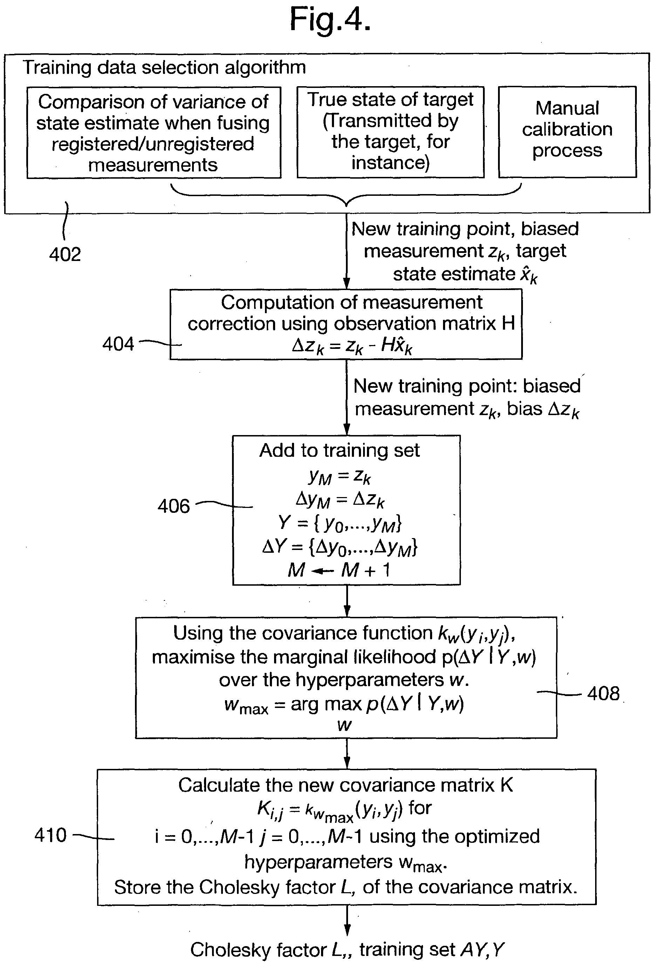

Figure 4 illustrates schematically steps involved in a learning procedure of the data selection and learning process 310 shown in Figure 3. In the embodiment described herein a Gaussian Process framework is used as a non-linear, non-parametric regression model. A training set of registration errors is used, which is built from the differences between unregistered and registered measurements, or their estimates. In the multiple sensor tracking system, estimates of registration errors can be derived from the state estimates of the target observed by the subset of registered sensors. If the target can provide its own (true) state, even sporadically, it can be used to derive the registration error of a sensor and added to the training set. The main advantages of Gaussian Processes over other non-parametric estimation techniques (e.g. Neural Networks) are:

- More rigorous foundations and Bayesian approach
- Artificial Neural Networks cannot inherently give an indication of the error of their prediction and a constant error model is often used. In a sensor fusion setting (e.g. Kalman filter), this represents a loss of valuable information. It can even introduce large errors when the value is predicted far from any training data.
- Gaussian Processes provide the uncertainty of the predicted value (as the covariance of a Gaussian variable). For example, if no training data exists in the neighbourhood of the point of prediction, the error of the predicted value will be very large.
- Less sensitive to over fitting and over smoothing (Occam's razor). By comparing and optimizing over the marginal likelihood of the data, a complex model will not degrade the quality of the regression. The GP inference will adapt the complex model to the observed data and the desired uncertainty level.
- Adding new training data to the Gaussian process is relatively easy and efficient implementations of the procedure exist (see Osborne, M. A. and Roberts, S.J. (2007) Gaussian Processes for Prediction. Technical Report PARG-07-01, University of Oxford for an implementation)

At step 402, the state estimate of the target $\hat{x}_k$ and its error covariance $P_k$ (which is an indication of the likely error of the state estimate) are received from the data fusion process 306, as well as the biased measurement $z_k$ from the local sensor 302. A training data selection algorithm at step 402 decides whether the new biased measurement should be added to the training set. An example of a suitable decision algorithm, based on the comparison of the estimate covariance with and without the new training point, is described in the abovementioned Osborne and Roberts article under the name "Active Data Selection". Another possible selection algorithm is to use the true state of the target, when it is provided intermittently by the target.

At step 404, an estimate of the unbiased measurement is calculated by using the observation matrix used by the data fusion process 306. The bias $\Delta z_k$ is then calculated by taking the difference between the actual measurement $z_k$ and the estimation of the unbiased measurement.

The calculated bias $\Delta z_k$ and the original measurement $z_k$ are added to the training set at step 406. The training set is formed of a set of the original measurements $Y$ and a set of the biases $\Delta Y$ (where M in the equations shown at 406 in the Figure represents the number of data points, i.e. the number of biased measurement and bias estimate data pairs, in the training set).

This regression model uses a Gaussian Process of covariance function k(x,y) with hyperparameters w to fit the training data. Typically, the covariance function is a squared exponential function, whose hyperparameters are the characteristic length-scales, one for each dimension of the measurement vector (see Gaussian Processes for Machine Learning Carl Edward Rasmussen and Christopher K. I. Williams The MIT Press, 2006. ISBN 0-262-18253-X, Chapter 4 for further details). The hyperparameters of the covariance function are recalculated at 408 to fit the Gaussian Process model of the new training set. The fitting process maximizes the marginal likelihood of the data set based on the Gaussian Process of covariance k(x,y). The Gaussian assumptions allow the use of efficient optimization methods (as described in Section 5.4.1 of the abovementioned Rasmussen and Williams reference).

The covariance matrix is then calculated at step 410 by simply applying the covariance function at the training points, with the optimized hyperparameters. Since the regression process 304 uses the inverse of the covariance matrix it is more computationally efficient to calculate the Cholesky decomposition of the covariance matrix once for all and then reuse the Choleksy factor $L_{YY}$ (lower factor in this example) to perform the regression.

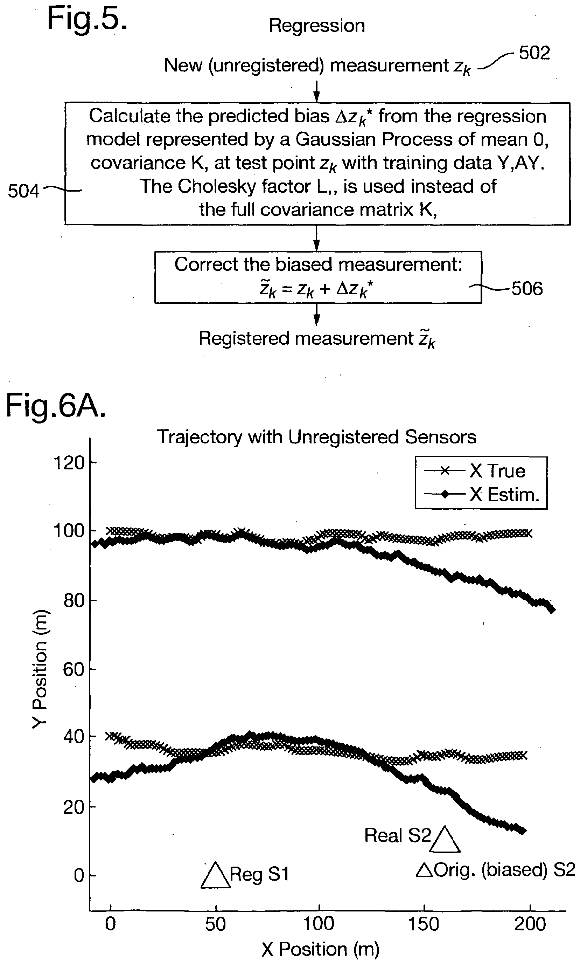

Turning to Figure 5, a regression procedure that uses values calculated during the learning procedure of Figure 4 is outlined. The learning procedure is normally executed only if the data selection algorithm 402 is performed. The regression procedure of Figure 5 is always executed following the reception of a new measurement from the sensor, resulting in an "online" registration procedure.

At step 502 the biased measurement $z_k$ from the local sensor 302 is received. At step 504 the predicted bias $\Delta z_k^*$ for the sensor measurement $z_k$ is calculated from a regression model represented by a Gaussian Process:

$$\begin{pmatrix} \Delta Y^{1..M} \\ \Delta z_k^* \end{pmatrix} = N \left( 0, \begin{pmatrix} K_{YY}(Y^{1..M}, Y^{1..M}) & K_{YY}(Y^{1..M}, z_k) \\ K_{YY}(z_k, Y^{1..M}) & K_{YY}(z_k^*, z_k^*) \end{pmatrix} \right)$$

The Gaussian Process is modelled by the covariance matrix $K_{YY}$ but the regression actually uses its Cholesky factor $L_{YY}$ calculated at 410 for computational efficiency. (The equations of the regression model, including the use of the Cholesky factor, are discussed in Section 2.2 of the abovementioned Rasmussen and Williams reference).

At step 506 the biased measurement $z_k$ is corrected by adding the bias $\Delta z_k{}^*$ calculated at step 504. This corrected value $\tilde{z}_k$ is then output by the registration process 304.

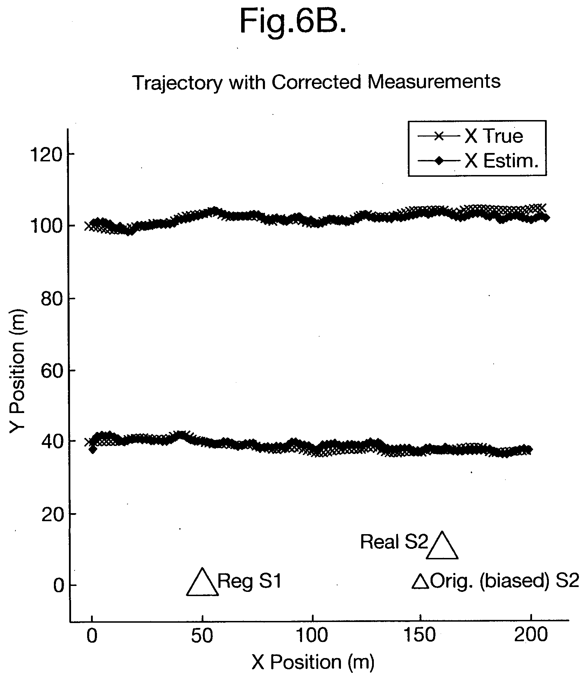

Figures 6A and 6B illustrate the results of a simulation of two sensors configured to execute the method described above tracking one target. Each sensor provides the range and bearing of the target from its position. The target motion follows a random walk model and the tracker is based on an Unscented Kalman Filter. One of the sensors is not correctly registered and its position is reported to be 10 m west and 10 m south of its real position. The target is tracked for 200 m and the experiment is repeated 2 times with different initial positions. The training set for the registration algorithm is composed of 20 randomly distributed training points. In a real world application, those training points can be derived from the state information sent by the target at regular intervals. The accuracy of the tracking is compared using the Root Mean Squared Error of the position estimate and the true position of the target.

Figure 6A is a graph showing example 2D coordinates of each target trajectory as measured by the sensor without running the registration process. Figure 6B is a similar graph showing the 2D trajectory with both sensors running the registration process described above (with 20 training points). The results are summarised in the following table:

| *Situation* | *Tracking error (RMSE)* |
|---|---|
| With registered sensors | 0.4 m |
| With unregistered sensors | 8.3 m |
| After correction with GP | 0.8 m |

**Claims**

1. A method of estimating a target measurement relating to at least one target position, the method including:

   obtaining at least one target measurement ($z_k$) from a first sensor, and
   applying a Gaussian Process (GP) technique to a said target measurement to obtain an estimated updated target measurement ($\tilde{z}_k$) by calculating a predicted bias ($\Delta z_k{}^*$) for the measurement ($z_k$) from a regression model represented by the GP and using the predicted bias to produce the estimated updated target measurement ($\tilde{z}_k$).

2. A method according to claim 1, wherein the first sensor is part of a distributed sensor fusion network including at least one further sensor.

3. A method according to claim 2, further including fusing the estimated updated target measurement with at least one further target measurement ($z_k{}''$) obtained from at least one further sensor in the distributed sensor fusion network to generate a fused measurement or measurements ($\hat{x}_k, P_k$) relating to the at least one target.

4. A method according to claim 3, wherein the applying of the Gaussian Process (GP) technique includes performing a learning process based on the at least one target measurement ($z_k$) and the fused measurement or measurements ($\hat{x}_k, P_k$) to generate a training set for use with the regression model.

5. A method according to claim 4, wherein the learning process involves calculating a covariance matrix ($K_{YY}$) and a Cholesky factor ($L_{YY}$) of the covariance matrix, where the Choleksy factor is used with the regression model for computational efficiency.

6. A method according to claim 4 or 5, wherein the training set initially includes a measurement value known or assumed to represent an error-free measurement taken by the first sensor.

7. A method according to any one of the preceding claims, wherein the GP regression model is a non-linear, non-parametric regression model.

8. A sensor configured to estimate a target measurement relating to at least one target position, the sensor including:

   a device configured to obtain at least one target measurement, and

**characterised by** including

a processor configured to apply a Gaussian Process (GP) technique to a said target measurement to obtain an estimated updated measurement by calculating a predicted bias ($\Delta z_k^*$) for the measurement ($z_k$) from a regression model represented by the GP and using the predicted bias to produce the estimated updated target measurement ($\tilde{z}_k$).

9. A computer program product comprising computer readable medium, having thereon computer program code means, when the program code is loaded, to make the computer execute a method of estimating a target measurement relating to at least one target position including:

obtaining at least one target measurement from a first sensor, and

applying a Gaussian Process (GP) technique to a said target measurement to estimate an updated target measurement by calculating a predicted bias ($\Delta z_k^*$) for the measurement ($z_k$) from a regression model represented by the GP and using the predicted bias to produce the estimated updated target measurement ($\tilde{z}_k$).

**Patentansprüche**

1. Verfahren zum Schätzen einer Zielmessung, die sich auf mindestens eine Zielposition bezieht, wobei das Verfahren Folgendes enthält:

Erhalten mindestens einer Zielmessung ($z_k$) von einem ersten Sensor und

Anwenden einer Gauß-Verfahrenstechnik (GP-Technik) auf die Zielmessung, um eine geschätzte aktualisierte Zielmessung ($\tilde{z}_k$) durch Berechnen einer vorhergesagten Tendenz ($\Delta z_k^*$) für die Messung ($z_k$) aus einem Regressionsmodell, das durch die GP repräsentiert wird, und unter Verwendung der vorhergesagten Tendenz zu erhalten, um die geschätzte aktualisierte Zielmessung ($\tilde{z}_k$) zu erzeugen.

2. Verfahren nach Anspruch 1, wobei der erste Sensor Teil eines verteilten Sensorfusionsnetzes ist, das mindestens einen weiteren Sensor enthält.

3. Verfahren nach Anspruch 2, das ferner enthält, die geschätzte aktualisierte Zielmessung mit mindestens einer weiteren Zielmessung ($z_k''$), die von mindestens einem weiteren Sensor in dem verteilten Sensorfusionsnetz erhalten wurde, zu fusionieren, um eine oder mehrere fusionierte Messungen ($\hat{x}_k$, $P_k$), die sich auf das mindestens eine Ziel beziehen, zu erzeugen.

4. Verfahren nach Anspruch 3, wobei das Anwenden der Gauß-Verfahrenstechnik (GP-Technik) enthält, einen Lernprozess aufgrund der mindestens einen Zielmessung ($z_k$) und der einen oder der mehreren fusionierten Messungen ($\hat{x}_k$, $P_k$) auszuführen, um eine Schulungsgruppe für die Verwendung mit dem Regressionsmodell zu erzeugen.

5. Verfahren nach Anspruch 4, wobei der Lernprozess beinhaltet, eine Kovarianzmatrix ($K_{YY}$) und einen Cholesky-Faktor ($L_{YY}$) der Kovarianzmatrix zu berechnen, wobei der Cholesky-Faktor mit dem Regressionsmodell für eine Recheneffizienz verwendet wird.

6. Verfahren nach Anspruch 4 oder 5, wobei die Schulungsgruppe anfänglich einen Messwert enthält, der bekannt ist oder angenommen wird, um eine fehlerfreie Messung, die durch den ersten Sensor aufgenommen wurde, zu repräsentieren.

7. Verfahren nach einem der vorhergehenden Ansprüche, wobei das GP-Regressionsmodell ein nichtlineares, nicht parametrisches Regressionsmodell ist.

8. Sensor, der konfiguriert ist, eine Zielmessung zu schätzen, die sich auf mindestens eine Zielposition bezieht, wobei der Sensor Folgendes enthält:

eine Vorrichtung, die konfiguriert ist, mindestens eine Zielmessung zu erhalten, und
**dadurch gekennzeichnet, dass** sie enthält:

einen Prozessor der konfiguriert ist, eine Gauß-Verfahrenstechnik (GP-Technik) auf eine Zielmessung anzuwenden, um eine geschätzte aktualisierte Messung durch Berechnen einer vorhergesagten Tendenz ( $\Delta z_{k}^{*}$ ) für die Messung ($z_k$) aus einem Regressionsmodell, das durch die GP repräsentiert wird, und unter Verwendung der vorhergesagten Tendenz zu erhalten, um die geschätzte aktualisierte Zielmessung ($\tilde{z}_k$) zu erzeugen.

9. Computerprogrammprodukt, das ein computerlesbares Medium mit Computerprogrammcodemittel auf ihm umfasst, wenn der Programmcode geladen wird, um zu bewirken, dass der Computer ein Verfahren zum Schätzen einer Zielmessung ausführt, die sich auf mindestens eine Zielposition bezieht, das Folgendes enthält:

Erhalten mindestens einer Zielmessung von einem ersten Sensor und
Anwenden einer Gauß-Verfahrenstechnik (GP-Technik) auf die Zielmessung, um eine aktualisierte Zielmessung durch Berechnen einer vorhergesagten Tendenz ( $\Delta z_{k}^{*}$ ) für die Messung ($z_k$) aus einem Regressionsmodell, das durch die GP repräsentiert wird, und unter Verwendung der vorhergesagten Tendenz zu schätzen, um die geschätzte aktualisierte Zielmessung ($\tilde{z}_k$) zu erzeugen.

## Revendications

1. Procédé d'estimation d'une mesure de cible associée à au moins une position de cible, le procédé comprenant les étapes consistant à :

obtenir au moins une mesure de **cible** ($z_k$) auprès d'un premier capteur, et
appliquer une technique de Processus Gaussien (GP) à une dite mesure de cible dans le but d'obtenir une mesure de cible actualisée estimée ($\tilde{z}_k$) en calculant un biais prédit ($\Delta z_{k}^{*}$) pour la mesure ($z_k$) à partir d'un modèle de régression représenté par le GP et en utilisant le biais prédit pour produire la mesure de cible actualisée estimée ($\tilde{z}_k$).

2. Procédé selon la revendication 1, dans lequel le premier capteur fait partie d'un réseau de fusion de capteurs réparti comportant au moins un autre capteur.

3. Procédé selon la revendication 2, comportant en outre l'étape consistant à fusionner la mesure de cible actualisée estimée avec au moins une autre mesure de cible ($z_{k}^{"}$) obtenue auprès d'au moins un autre capteur dans le réseau de fusion de capteurs réparti dans le but de générer une ou plusieurs mesures fusionnées ($\hat{x}_k$, $P_k$) associées à ladite au moins une cible.

4. Procédé selon la revendication 3, dans lequel l'étape consistant à appliquer la technique de Processus Gaussien (GP) comporte l'étape consistant à exécuter un processus d'apprentissage sur la base de ladite au moins une mesure de ($z_k$) et de la ou des mesures fusionnées ($\hat{x}_k$, $P_k$) dans le but de générer une base d'apprentissage destinée à être utilisée avec le modèle de régression.

5. Procédé selon la revendication 4, dans lequel le processus d'apprentissage met en jeu le calcul d'une matrice de covariance ($K_{YY}$) et d'un facteur de Cholesky ($L_{YY}$) de la matrice de covariance, le facteur de Cholesky étant utilisé avec le modèle de régression à des fins d'efficacité calculatoire.

6. Procédé selon la revendication 4 ou 5, dans lequel la base d'apprentissage comporte initialement une valeur de mesure dont on sait ou suppose qu'elle représente une mesure sans erreur effectuée par le premier capteur.

7. Procédé selon l'une quelconque des revendications précédentes, dans lequel le modèle de régression du GP est un modèle de régression non paramétrique et non linéaire.

8. Capteur configuré pour estimer une mesure de cible associée à au moins une position de cible, le capteur comportant :

un dispositif configuré pour obtenir au moins une mesure de cible, et
le capteur étant **caractérisé en ce qu'**il comporte
un processeur configuré pour appliquer une technique de Processus Gaussien (GP) à une dite mesure de cible dans le but d'obtenir une mesure actualisée estimée en calculant un biais prédit ($\Delta z_k^*$) pour la mesure ($z_k$) à partir d'un modèle de régression représenté par le GP et en utilisant le biais prédit pour produire la mesure de cible actualisée estimée ($\tilde{z}_k$).

**9.** Produit-programme d'ordinateur comprenant un support lisible par ordinateur sur lequel figurent des moyens formant code de programme d'ordinateur destinés, une fois le code de programme chargé, à faire exécuter, par l'ordinateur, un procédé d'estimation d'une mesure de cible associée à au moins une position de cible comportant les étapes consistant à :

obtenir au moins une mesure de cible auprès d'un premier capteur, et
appliquer une technique de Processus Gaussien (GP) à une dite mesure de cible dans le but d'estimer une mesure de cible actualisée en calculant un biais prédit ($\Delta z_k^*$) pour la mesure ($z_k$) à partir d'un modèle de régression représenté par le GP et en utilisant le biais prédit pour produire la mesure de cible actualisée estimée ($\tilde{z}_k$).

# Fig.1.

# Fig.2.

# Fig.3.

State estimate (mean) $\hat{x}_k$
Estimate covariance P,

# Fig.4.

Training data selection algorithm

| Comparison of variance of state estimate when fusing registered/unregistered measurements | True state of target (Transmitted by the target, for instance) | Manual calibration process |
|---|---|---|

402

New training point, biased measurement $z_k$, target state estimate $\hat{x}_k$

404 — Computation of measurement correction using observation matrix H
$$\Delta z_k = z_k - H\hat{x}_k$$

New training point: biased measurement $z_k$, bias $\Delta z_k$

406 — Add to training set
$$y_M = z_k$$
$$\Delta y_M = \Delta z_k$$
$$Y = \{y_0,...,y_M\}$$
$$\Delta Y = \{\Delta y_0,...,\Delta y_M\}$$
$$M \leftarrow M + 1$$

Using the covariance function $k_w(y_i,y_j)$, maximise the marginal likelihood $p(\Delta Y \mid Y,w)$ over the hyperparameters $w$.
$$w_{max} = \arg\max_w p(\Delta Y \mid Y,w)$$
— 408

410 — Calculate the new covariance matrix K
$$K_{i,j} = k_{w_{max}}(y_i,y_j) \text{ for}$$
$i = 0,...,M\text{-}1 \ j = 0,...,M\text{-}1$ using the optimized hyperparameters $w_{max}$.
Store the Cholesky factor $L$, of the covariance matrix.

Cholesky factor $L$, training set $\Delta Y, Y$

# Fig.5.

Regression

New (unregistered) measurement $z_k$ ⟋ 502

504 ⟋ Calculate the predicted bias $\Delta z_k^*$ from the regression model represented by a Gaussian Process of mean 0, covariance K, at test point $z_k$ with training data Y,ΔY. The Cholesky factor $L_{,,}$ is used instead of the full covariance matrix K,

Correct the biased measurement:
$$\tilde{z}_k = z_k + \Delta z_k^*$$
⟋ 506

Registered measurement $\tilde{z}_k$

# Fig.6A.

Trajectory with Unregistered Sensors

Legend:
—✕— X True
—◆— X Estim.

Real S2 △
△ Reg S1
△ Orig. (biased) S2

Y Position (m) vs X Position (m)

# Fig.6B.

## Trajectory with Corrected Measurements

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4860216 A

**Non-patent literature cited in the description**

- **J. MANYIKA ; H.F. DURRANT-WHYTE.** Data Fusion and Sensor Management: A Decentralised Information-Theoretic Approach. *Ellis Horwood,* 1994

- Registration: A pre-requisite for multiple sensor tracking. **M.P. DANA.** Multitarget-Multisensor Tracking: Advanced Applications. Artech House, 1990
- **OSBORNE, M. A. ; ROBERTS, S.J.** Gaussian Processes for Prediction. *Technical Report PARG-07-01,* 2007